# EUROPÄISCHE PATENTANMELDUNG

(11) **EP 2 520 896 A2**
(43) Veröffentlichungstag der Anmeldung: **07.11.2012**
(21) Anmeldenummer: 12165522.9
(22) Anmeldetag: 25.04.2012
(51) Int. Cl.: F41H 5/04, F41H 5/26

(54) **Durchschusshemmende Brandschutzverglasung**

(30) Priorität: 02.05.2011 DE 102011050039
(71) Anmelder: Schott AG, 55122 Mainz (DE)
(72) Erfinder: Panzner, Gerrit, 07407 Rudolstadt (DE); Freitag, Rüdiger, 36433 Etterwinden (DE); Wehmeier, Lutz, Dr., 07751 Jena (DE)
(74) Vertreter: Fleck, Hermann-Josef

(57) **Zusammenfassung**

Die Erfindung betrifft eine durchschusshemmende Brandschutzverglasung mit einem Verglasungsrahmen (20), der ein Brandschutzglas (10) aufnimmt, wobei der Verglasungsrahmen (20) das Brandschutzglas (10) mittels Stützprofilen (21) umgibt, und wobei den Stützprofilen (21) ein thermisches Funktionselement (22) zugeordnet ist. Eine solche Brandschutzverglasung eignet sich dann auch gleichzeitig als beschusshemmende Verglasung, wenn vorgesehen ist, dass das Brandschutzglas (10) zwei oder mehrere Brandschutzglasscheiben (11) aufweist, deren thermischer Erweichungspunkt logη = 7,6 oberhalb 700 °C liegt, und die einen thermischen Längenausdehnungskoeffizienten von α ≤ 5x10⁻⁶ K⁻¹ aufweisen.

## Beschreibung

Die Erfindung betrifft eine durchschusshemmende Brandschutzverglasung mit einem Verglasungsrahmen, der ein Brandschutzglas aufnimmt, wobei der Verglasungsrahmen das Brandschutzglas mittels Stützprofilen umgibt, und wobei den Stützprofilen ein thermisches Funktionselement zugeordnet ist.

Aus der WO 2005/090255 sind Brandschutzverglasungen bekannt, bei denen zueinander parallel beabstandete Glasscheiben verwendet sind. In dem Zwischenraum zwischen den Glasscheiben sind Brandschutzschichten bestehend aus Folie eingesetzt. Weiterhin sind Brandschutzverglasungen bekannt, bei denen zwischen den einzelnen Glasscheiben intumeszierende Schichten aus sprödem Alkalisilikat bzw. sehr weichen Acrylpolymeren verwendet sind. Die intumeszierenden Schichten haben im Brandschutzfall eine kühlende und isolierende Wirkung und erhöhen so die Standzeit der Brandschutzverglasung.

Wenn an solche Verglasungen durchschusshemmende Anforderungen gestellt werden, so erweisen sich die intumeszierenden Schichten als nachteilig, sie führen insbesondere dann regelmäßig zum vorzeitigen Bauteilversagen. Durchschusshemmende Eigenschaften lassen sich dann nur durch signifikant dickere Glasaufbauten erzielen. Hierdurch werden die Bauteilgewichte aber erheblich erhöht.

Es ist Aufgabe der Erfindung, eine Brandschutzverglasung der eingangs erwähnten Art zu schaffen, die bei optimierter Bauteildicke gleichzeitig einen Beschussschutz und einen Brandschutz bietet.

Diese Aufgabe wird dadurch gelöst, dass das Brandschutzglas zwei oder mehrere Brandschutzglasscheiben aufweist, deren thermischer Erweichungspunkt log_{η}= 7,6 oberhalb 700°C liegt, und die einen thermischen Längenausdehnungskoeffizienten von α ≤ 5x10⁻⁶ K⁻¹ aufweisen.

Bei diesen Brandschutzverglasungen brechen im Brandfall nur die dem Brandherd zugewandte erste (n) Brandschutzglasscheibe (n), wobei der Bruch aufgrund des geringen thermischen Ausdehnungskoeffizienten relativ spät stattfindet und sich in der Regel nur auf einfache Risse beschränkt. Damit können die gebrochenen Scheibenstücke aufgrund der Verzahnung der Bruchstücke untereinander über einen gewissen Zeitraum stabil bleiben. Die nachfolgenden Brandschutzglasscheiben werden damit keinem direkten Kontakt zum Feuer ausgesetzt und sie heizen sich dadurch nur allmählich auf. Die resultierenden Temperaturgradienten sind dabei so gering, dass die Spannungen in diesen Brandschutzglasscheiben nicht zum Scheibenbruch führen. Damit bleibt der Raumabschluss sicher erhalten. Die Temperaturerhöhung auf der dem Brandherd abgewandten Seite der Brandschutzverglasung beschränkt sich dann im Wesentlichen auf Wärmeleitvorgänge. Bei dieser Brandschutzverglasung wird zudem ein hoher ballistischer Schutz mit den verwendeten Laminat aus Brandschutzglasscheiben erreicht.

Es hat sich überraschenderweise gezeigt, dass insbesondere auch bei entsprechender Bauteilauslegung Hartkernmunition beschusssicher abgefangen werden kann.

Gemäß einer bevorzugten Ausgestaltungsvariante der Erfindung kann es vorgesehen sein, dass zumindest eine der Brandschutzglasscheiben eine Dicke ≥ 7 mm aufweist. Bei diesen Abmessungen wird eine sichere Verzahnung der einzelnen Scheibenstücke im Fall eines Scheibenbruches bewirkt, und somit die mechanische Stabilität der Brandschutzglasscheibe dann aufrechterhalten.

Eine Erhöhung der Sicherheit im Beschussfall wird nach einer weiteren Erfindungsvariante dadurch erreicht, dass das Brandschutzglas wenigstens eine thermische oder chemisch vorgespannte Abschlussscheibe aus Glasmaterial oder eine Abschlussscheibe aus Polycarbonat aufweist, die die Glasscheibe außenseitig im Bereich der Front- und/oder Rückseite des Brandschutzglases abdeckt. Hiermit wird ein Splitterabgang im Bereich der der Beschussseite abgewandten Rückseite der Brandschutzverglasung zuverlässig verhindert.

Hoch thermisch belastbare Brandschutzverglasungen, die auch intensiver Befeuerung dauerhaft widerstehen, lassen sich dadurch erreichen, dass der thermische Erweichungspunkt der Brandschutzglasscheiben log_{η} = 7,6 oberhalb 800°C, insbesondere im Bereich zwischen 820°C und 840°C, gewählt ist.

Dabei sollte der thermische Längenausdehnungskoeffizient der Brandschutzglasscheiben α ≤ 4x10⁻⁶ K⁻¹, insbesondere im Bereich zwischen 3x10⁻⁶ K⁻¹ bis 3,5x10⁻⁶ K⁻¹ liegen.

Wenn die erfindungsgemäße Brandschutzverglasung derart ausgeführt ist, dass für die Brandschutzglasscheiben ein Borosilikatglas verwendet ist, dann kann auf standardisierte Bauteilkomponenten zurückgegriffen werden, die die gestellten Anforderungen zuverlässig erfüllen.

Besonders bevorzugt weist das Brandschutzglas mindestens drei Brandschutzglasscheiben auf. Damit lassen sich dann Brandschutzklassifizierungen nach DIN EN 357 EI 20 und Durchschusshemmungen BR4 nach ENV 1063 und höher erfüllen.

Besonders bevorzugt weist die der Brandseite zugewandte außenseitige Brandschutzglasscheibe eine größere Dicke aufweist als eine an diese Brandschutzglasscheibe mittelbar oder unmittelbar anschließende Brandschutzglasscheibe. Die dem Brandherd zunächst ausgesetzte Brandschutzglasscheibe hat damit eine im Bruchfall höhere Stabilität infolge der Verzahnung der Scheibenbestandteile.

Im Rahmen der Erfindung können die Brandschutzglasscheiben unter Vermittlung einer Verbindungsschicht aus Gießharz miteinander verbunden sein, wobei deren Schichtdicke ≥ 0,9 mm beträgt. Es hat sich gezeigt, dass diese Schichtdicken sich sowohl im Brandfall als auch im Beschussfall optimiert auswirken, wobei das Gießharz im Beschussfall die entstehenden Bruchstücke sicher hält.

Denkbar ist es auch, dass die Brandschutzglasscheiben unter Vermittlung einer Verbundschicht bestehend aus einem Folienmaterial, insbesondere aus PVB, miteinander verbunden sind. Diese Brandschutzverglasungen können insbesondere im Autoklavverfahren hergestellt werden, wobei ein inniger Verbund der Brandschutzglasscheiben untereinander erzielt ist. Die Schichtdicke der Verbindungsschicht sollte in diesem Falle im Bereich zwischen 0,3 mm und 0,9 mm, vorzugsweise im Bereich zwischen 0,35 mm und 0,85 mm, liegen.

Eine besonders bevorzugte Erfindungsvariante kennzeichnet sich dadurch aus, dass zwischen den einzelnen Brandschutzglasscheiben zumindest teilweise unterschiedliche Dicken der Zwischenschicht vorgesehen sind. Es hat sich überraschenderweise gezeigt, dass diese variierende Dicke sich bei unterschiedlichen Beschussbelastungen vorteilhaft auswirkt.

Eine denkbare Erfindungsvariante ist dergestalt, dass der Verglasungsrahmen einen zu dem Stützprofil beabstandet gehaltenen Profilabschnitt aufweist, und dass der Abstandsbereich zwischen dem Stützprofil und dem Profilabschnitt mit dem thermischen Funktionselement überbrückt ist. Auf diese Weise wird eine thermische Trennung im Bereich des Verglasungsrahmens erreicht, der den Wärmeübergang im Verglasungsrahmen blockiert und hier zu einer erhöhten Brandschutzsicherheit beiträgt. Alternativ oder zusätzlich kann es auch vorgesehen sein, dass das Stützprofil einen Hohlraum umgibt, der zumindest teilweise mit dem thermischen Funktionselement ausgefüllt ist. Auch hier wird eine thermische Trennung zwischen der dem Brandschutzherd zugewandten Seite und der Rückseite der Brandschutzverglasung erreicht.

Das thermische Funktionselement kann insbesondere aus nicht brennbaren mineralischen Plattenwerkstoffen, Glasfaserkompositen oder anorganischen Salzhydraten bestehen. Dieses Material hat den Vorteil, dass es eine geringe Wärmeleitung aufweist und/oder unter Aufnahme thermischer Energie Kristallwasser abgibt.

Eine denkbare Erfindungsvariante ist derart, dass die Durchschusshemmung der Stützprofile durch zusätzliche Einlagen wie Panzerstahl oder Materialkomposite verbessert wird.

Die Erfindung wird im Folgenden anhand von in den Zeichnungen dargestellten Ausführungsbeispielen näher erläutert. Es zeigen:
- Figur 1: eine Brandschutzverglasung in Teildarstellung und im Vertikalschnitt;
- Figur 2: eine weitere Ausführungsvariante einer Brandschutzverglasung in Teildarstellung und im Vertikalschnitt; und
- Figur 3: in schematischer Darstellung und in Seitenansicht ein Brandschutzglas.

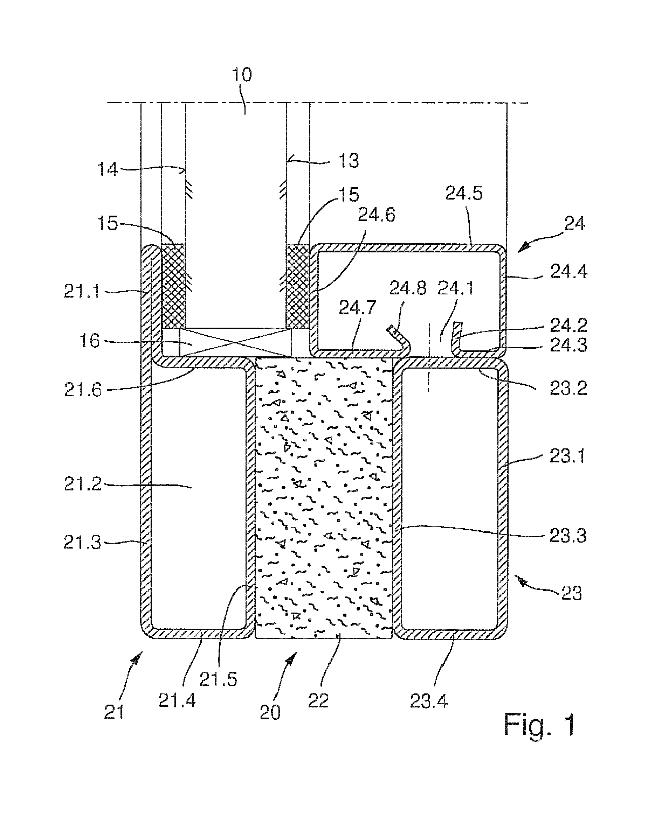

Figur 1 zeigt eine Brandschutzverglasung, die einen Verglasungsrahmen 20 aufweist, der ein Brandschutzglas 10 umlaufend umgibt. Der Verglasungsrahmen 20 weist einen Teilrahmen auf, der aus Stützprofilen 21 zusammengesetzt ist, und der das Brandschutzglas 10 umlaufend umgibt. Weiterhin ist ein zweiter umlaufender Teilrahmen verwendet, der aus Profilabschnitten 23 zusammengesetzt ist. Die Stützprofile 21 sind als Hohlprofile ausgebildet, die einen Hohlraum 21.2 umgeben. Dabei wird der Hohlraum 21.2 von zwei zueinander parallel beabstandeten Wandungen 21.3 sowie einem die Wandungen 21.3 verbindenden Übergangsschnitt 21.4 und die Wandungen 21.3 verbindenden Tragabschnitt 21.6 begrenzt. Der Tragabschnitt 21.6 geht zusammen mit der Wandung 21.3 in Form eines Doppelfalzes in einen Stützabschnitt 21.1 über.

Der Profilabschnitt 23 ist als Vierkanthohlprofil ausgebildet und wird von zwei Profilseiten 23.1, 23.3 sowie zwei Verbindungsabschnitten 23.2, 23.4 begrenzt. Die Profilabschnitte 23 sind parallel beabstandet zu den Stützprofilen 21 angeordnet. Im Abstandsbereich ist ein thermisches Funktionselement 22 angeordnet, das als thermische Trennung dient.

Das Brandschutzglas 10 ist mit seiner Außenseite 14 unter Zwischenlage einer Dichtung 15 gegen den Stützabschnitt 21.1 gestellt. Im Bereich seiner umlaufenden Kante ist das Brandschutzglas 10 mittels eines Tragklotzes 16 gegenüber dem Tragabschnitt 21.6 des Stützprofiles 21 abgestützt. Zur Fixierung des Brandschutzglases 10 in dem Verglasungsrahmen 20 ist eine Glasleiste 24 verwendet. Diese Glasleiste 24 ist wieder als Hohlprofil ausgebildet und weist einen Anlageteil 24.6 auf. Dieser Anlageteil 24.6 liegt unter Zwischenlage einer Dichtung 15 an der Vorderseite 13 des Brandschutzglases 10 an. An das Anlageteil 24.6 schließt sich rechtwinklig eine Profilwand 24.5 und eine Abwinklung 24.7 an. Die Profilwand 24.5 geht in eine Frontwand 24.4 über, die parallel beabstandet zu dem Anlageteil 24.6 gehalten ist.

Der Profilwand 24.5 abgekehrt geht die Frontwand 24.4 in eine Abwinklung 24.3 über. Die Abwinklung 24.3 läuft in einem abgekanteten Endabschnitt 24.2 aus. Ebenso läuft die Abwinklung 24.7 in einem abgekanteten Endabschnitt 24.8 aus. Zwischen den Endabschnitten 24.2 und 24.8 ist eine Befestigungsaufnahme 24.1 gebildet. Diese Befestigungsaufnahme 24.1 ist im Bereich der Profilseite 23.3 des Profilabschnittes 23 angeordnet. Zur Fixierung wird die Glasleiste 24 auf Schraubelemente (nicht dargestellt) aufgesteckt, die in die Profilseite 23.2 eingeschraubt sind.

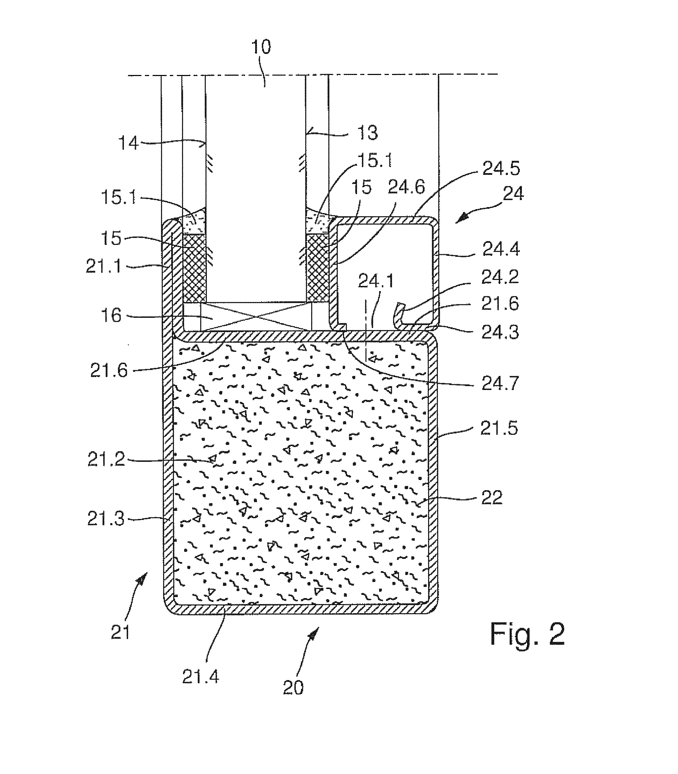

Figur 2 zeigt eine weitere Ausgestaltungsvariante einer Brandschutzverglasung. Bei dieser Bauvariante wird für den Verglasungsrahmen 20 kein zweiteiliger Rahmenaufbau verwendet, sondern es ist ein umlaufender Rahmen alleine von Stützprofilen 21 gebildet. Dabei sind die Stützprofile 21 im Wesentlichen gleich aufgebaut, wie die Stützprofile 21 gemäß Figur 1. Sie weisen lediglich im Bereich der Hohlkammer 21.2 einen größeren Querschnitt auf. Dieser Querschnitt ist mit dem thermischen Funktionselement 22 ausgefüllt, das sowohl die thermische Dämmung zwischen der Brandseite und der Innenseite gewährleistet und den Wärmeübergang vermindert als auch durch Wasserabgabe eine kühlende Wirkung ausübt. Das Brandschutzglas 10 ist wiederum mittels Dichtungen 15 gegenüber dem Stützabschnitt 21.1 und einer Glasleiste 24 abgestützt und die umlaufende Kante des Brandschutzglases 10 ist mit dem Tragelementes 16 gegenüber dem Tragabschnitt 21.6 beabstandet gehalten. Die Glasleiste 24 entspricht in ihrer Funktion im Wesentlichen der Glasleiste 24 gemäß Figur 1, sie weist lediglich eine geringere Querschnittsausdehnung auf, und die Abwinklung 24.7 ist in diesem Falle nicht mit einem Endabschnitt versehen, der die Befestigungsaufnahme 24.1 begrenzt.

Im Übrigen kann auf die obigen, zu Figur 1 gemachten Ausführungen Bezug genommen werden, wobei jeweils funktionsmäßig gleiche Bauteile mit den gleichen Bezugszeichen beziffert wurden.

Wie Figur 2 weiter erkennen lässt, kann im Übergangsbereich der Dichtungen 15 aus optischen Gründen auch eine Silikonraupe 15.1 eingefügt sein.

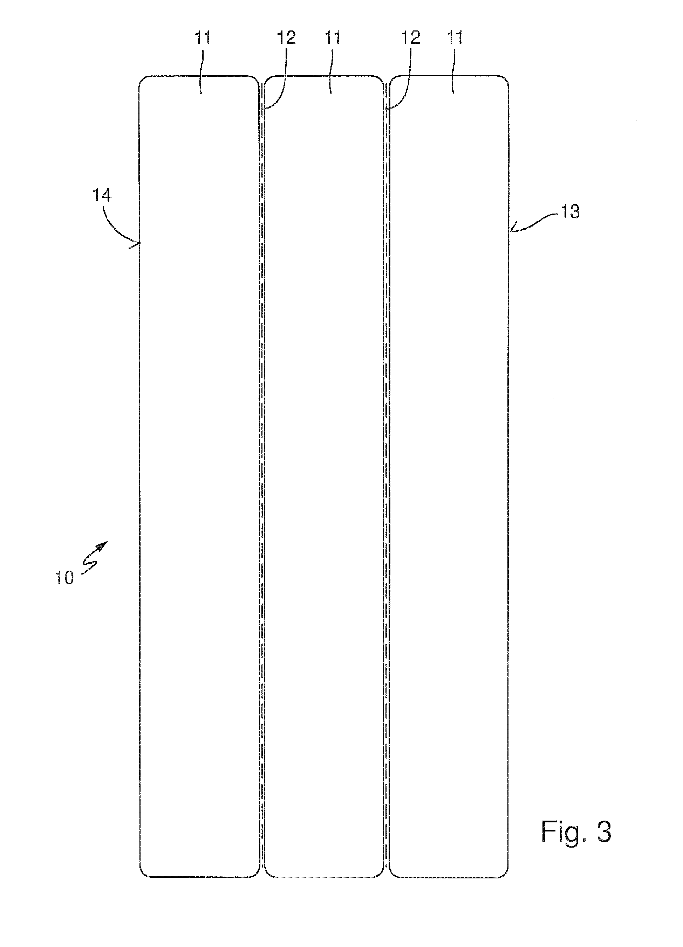

Figur 3 zeigt in schematischer Darstellung näher den Aufbau eines Brandschutzglases 10. Wie diese Darstellung erkennen lässt, weist das Brandschutzglas 10 drei zueinander parallel beabstandete Brandschutzglasscheiben 11 auf. Zwischen den Brandschutzglasscheiben 11 ist eine Verbindungsschicht 12 angeordnet. Diese Verbindungsschicht 12 kann von einem Gießharz gebildet sein. Weiterhin ist es denkbar, dass die Verbindungsschicht 12 im Autoklavverfahren erzeugt wird, wobei dann zwischen den Brandschutzglasscheiben 11 eine PVB-Folie eingelegt wird. Diese PVB-Folie schmilzt im Autoklavverfahren auf und verbindet die Brandschutzglasscheiben 11 miteinander. Die Brandschutzglasscheiben 11 weisen erfindungsgemäß einen thermischen Erweichungspunkt log_{η} = 7,6 oberhalb 700°C auf und besitzen einen thermischen Längenausdehnungskoeffizient von α ≤ 5x10⁻⁶ K⁻¹ auf. Insbesondere können die Brandschutzglasscheiben 10 aus einem Borosilikatglas gebildet sein.

Nachfolgend werden drei Beispiele für den Aufbau eines Brandschutzglases 10 angegeben. Dabei sind in den Tabellen mit laufenden Nummern die Bauteile beginnend von der Brandseite nummeriert.

Im ersten Ausführungsbeispiel ist dementsprechend mit der Laufnummer 1 die erste Brandschutzglasscheibe 11 bezeichnet, die aus einem Borosilikatglas BOROFLOAT^{®} 40 (Markenglas der SCHOTT AG) mit einer Dicke von 4 mm gebildet ist. Daran schließt sich mit der Laufnummer 2 eine Gießharzschicht mit einer Schichtdicke von 1 mm und anschließend eine Brandschutzglasscheibe BOROFLOAT^{®} 33 (Markenglas der SCHOTT AG) mit einer Schichtdicke von 7,5 mm an.

Aus Tabelle 1 geht hervor, dass das Brandschutzglas 10 auf seiner Rückseite, also der der Brandseite abgewandten Seite, mit einer Polycarbonatschicht mit einer Schichtdicke von 3 mm abgeschlossen ist. Diese Polycarbonatscheibe dient als Abschlussscheibe, die im Beschussfall rückseitig einen Splitterabgang verhindert.

Bei dem Aufbau nach Tabelle 3 ist rückseitig eine Abschlussscheibe aus PYRAN^{®} S, nämlich einem thermisch vorgespannten Borosilikatglas verwendet. Dieses thermisch vorgespannte Glas kann ebenfalls einen rückseitigen Splitterabgang im Beschussfall verhindern.

### Aufbau 1 - Brandschutzklassifizierung nach DIN EN 357 EI 20, Durchschusshemmung BR 4 nach ENV 1063

### Bauteilabmessung 500 mm x 500 mm

| **LNr** | **Dicke** | **Material** |
|---|---|---|
| 1 | 4 mm | BOROFLOAT^{®} 40 |
| 2 | 1 mm | Gießharz |
| 3 | 7,5 mm | BOROFLOAT^{®} 33 |
| 4 | 1,5 mm | Gießharz |
| 5 | 5,5 mm | BOROFLOAT^{®} 33 |
| 6 | 1,5 mm | Gießharz |
| 7 | 3 mm | Polycarbonat |

### Laminatherstellung:

- Prinzip:: Verklebung Gießharz; JenUV-Pleximer JPM-012-05
- Prozessparameter:: UV-Härtung bei Raumtemperatur: 20 Min

- Prüfung der Feuerwiderstandes nach EN 1363: Ergebnis EI 20
- Prüfung der Widerstandsklasse gegen Beschuss nach EN 1063: Ergebnis BR 4 NS

### Aufbau 2 - Brandschutzklassifizierung nach DIN EN 357 EI 45/E60, Durchschusshemmung BR 6 nach ENV 1063

### Bauteilabmessung 800 mm x 800 mm

| **LNr** | **Dicke** | **Material** |
|---|---|---|
| 1 | 8 mm | Borosilikatglas Boro 40 |
| 2 | 0,38 mm | PVB-Folie |
| 3 | 8 mm | Borosilikatglas Boro 40 |
| 4 | 0,38 mm | PVB-Folie |
| 5 | 8 mm | Borosilikatglas Boro 40 |
| 6 | 0,76 mm | PVB-Folie |
| 7 | 8 mm | Borosilikatglas Boro 40 |
| 8 | 0,76 mm | PVB-Folie |
| 9 | 8 mm | Borosilikatglas Boro 40 |
| 10 | 0,76 mm | PVB-Folie |
| 11 | 8 mm | Borosilikatglas Boro 40 |
| 12 | 0,76 mm | PVB-Folie |
| 13 | 8 mm | Borosilikatglas Boro 40 |

### Laminatherstellung:

- Prinzip:: Sackverfahren; Autoklavfertigung
- Prozessparameter:: Gesamtdauer: 8 Std., Max. Temperatur: 150°C, Max. Druck: 5 bar

- Prüfung der Widerstandsklasse gegen Beschuss nach EN 1063: Ergebnis BR 6 S
- Prüfung des Feuerwiderstandes nach EN 1363: Ergebnis EI 45/E60

### Aufbau 3 - Brandschutzklassifizierung nach DIN EN 357 EI 30/E60, Durchschusshemmung BR 7 nach ENV 1063

### Bauteilabmessung 1000 mm x 2200 mm

| **LNr** | **Dicke** | **Material** |
|---|---|---|
| 1 | 9 mm | Borosilikatglas BOROFLOAT^{®} 33 |
| 2 | 0,38 mm | PVB-Folie |
| 3 | 9 mm | Borosilikatglas BOROFLOAT^{®} 33 |
| 4 | 0,38 mm | PVB-Folie |
| 5 | 9 mm | Borosilikatglas BOROFLOAT^{®} 33 |
| 6 | 0,76 mm | PVB-Folie |
| 7 | 8 mm | Borosilikatglas BOROFLOAT^{®} 40 |
| 8 | 0,76 mm | PVB-Folie |
| 9 | 8 mm | Borosilikatglas BOROFLOAT^{®} 40 |
| 10 | 0,76 mm | PVB-Folie |
| 11 | 8 mm | Borosilikatglas BOROFLOAT^{®} 40 |
| 12 | 0,76 mm | PVB-Folie |
| 13 | 8 mm | Borosilikatglas BOROFLOAT^{®} 40 |
| 14 | 0,38 mm | PVB-Folie |
| 15 | 8 mm | PYRAN^{®} S (thermisch vorgespanntes BOROFLOAT^{®} 40) |

### Laminatherstellung:

- Prinzip:: Sackverfahren; Autoklavfertigung
- Prozessparameter:: Gesamtdauer: 8 Std., Max. Temperatur: 150°C, Max. Druck: 5 bar

● Prüfung der Widerstandsklasse gegen Beschuss nach EN 1063: Ergebnis BR 7 NS
● Prüfung des Feuerwiderstandes nach EN 1363: Ergebnis EI 30/E60

## Patentansprüche

1. Durchschusshemmende Brandschutzverglasung mit einem Verglasungsrahmen (20), der ein Brandschutzglas (10) aufnimmt, wobei der Verglasungsrahmen (20) das Brandschutzglas (10) mittels Stützprofilen (21) umgibt, und wobei den Stützprofilen (21) ein thermisches Funktionselement (22) zugeordnet ist,
**dadurch gekennzeichnet,**
**dass** das Brandschutzglas (10) zwei oder mehrere Brandschutzglasscheiben (11) aufweist, deren thermischer Erweichungspunkt log_{η} = 7,6 oberhalb 700 °C liegt, und die einen thermischen Längenausdehnungskoeffizienten von α ≤ 5x10⁻⁶ K⁻¹ aufweisen und
**dass** das Brandschutzglas (10) keine intumeszierende Zwischenschicht zwischen den Brandschutzglasscheiben (11) aufweist.

2. Brandschutzverglasung nach Anspruch 1,
**dadurch gekennzeichnet,**
**dass** zumindest eine der Brandschutzglasscheiben (11) eine Dicke größer als 7 mm aufweist.

3. Brandschutzverglasung nach Anspruch 1 oder 2,
**dadurch gekennzeichnet,**
**dass** das Brandschutzglas (10) wenigstens eine thermisch oder chemisch vorgespannte Abschlussscheibe aus Glasmaterial oder eine Abschlussscheibe aus Polycarbonat aufweist, die die Glasscheibe (11) außenseitig im Bereich der Front- und/oder Rückseite des Brandschutzglases (10) abdeckt.

4. Brandschutzverglasung nach einem der Ansprüche 1 bis 3,
**dadurch gekennzeichnet, dass** der thermische Erweichungspunkt der Brandschutzglasscheiben (11) log_{η} = 7,6 oberhalb 800°C, insbesondere im Bereich zwischen 820°C und 840°C, liegt.

5. Brandschutzverglasung nach einem der Ansprüche 1 bis 4,
**dadurch gekennzeichnet,**
**dass** der thermische Längenausdehnungskoeffizient der Brandschutzglasscheiben (11) α ≤ 4x10⁻⁶ K⁻¹, insbesondere im Bereich zwischen 3x10⁻⁶ K⁻¹ bis 3,5x10⁻⁶ K⁻¹ liegt.

6. Brandschutzverglasung nach einem der Ansprüche 1 bis 5,
**dadurch gekennzeichnet,**
**dass** die Brandschutzglasscheiben (11) aus Borosilikatglas bestehen.

7. Brandschutzverglasung nach einem der Ansprüche 1 bis 6,
**dadurch gekennzeichnet,**
**dass** das Brandschutzglas (10) wenigstens drei Brandschutzglasscheiben (11) aufweist.

8. Brandschutzverglasung nach einem der Ansprüche 1 bis 7,
**dadurch gekennzeichnet,**
**dass** die der Brandseite zugewandte außenseitige Brandschutzglasscheibe (11) eine größere Dicke aufweist als eine an diese Brandschutzglasscheibe (11) mittelbar oder unmittelbar anschließende Brandschutzglasscheibe (11).

9. Brandschutzverglasung nach einem der Ansprüche 1 bis 8,
**dadurch gekennzeichnet,**
**dass** die Brandschutzglasscheiben (11) unter Vermittlung einer Verbindungsschicht (12) aus Gießharz miteinander verbunden sind, deren Schichtdicke ≥ 0,9 mm beträgt.

10. Brandschutzverglasung nach Anspruch 9,
**dadurch gekennzeichnet,**
**dass** die Brandschutzglasscheiben (11) unter Vermittlung einer Verbundschicht (12) bestehend aus einem Folienmaterial, insbesondere aus PVB, EVA oder PUR, miteinander verbunden sind.

11. Brandschutzverglasung nach Anspruch 10,
**dadurch gekennzeichnet,**
**dass** die Schichtdicke der Verbindungsschicht (12) im Bereich zwischen 0,3 mm und 0,9 mm, vorzugsweise im Bereich zwischen 0,35 mm und 0,85 mm, liegt.

12. Brandschutzverglasung nach einem der Ansprüche 1 bis 11,
**dadurch gekennzeichnet,**
**dass** zwischen den einzelnen Brandschutzglasscheiben (11) zumindest teilweise unterschiedliche Dicken der Zwischenschicht (12) vorgesehen sind.

13. Brandschutzverglasung nach einem der Ansprüche 1 bis 12,
**dadurch gekennzeichnet,**
**dass** der Verglasungsrahmen (20) einen zu dem Stützprofil (21) beabstandet gehaltenen Profilabschnitt (23) aufweist, und dass der Abstandsbereich zwischen dem Stützprofil (21) und dem Profilabschnitt (23) mit dem thermischen Funktionselement (22) überbrückt ist.

14. Brandschutzverglasung nach einem der Ansprüche 1 bis 13,
**dadurch gekennzeichnet,**
**dass** das Stützprofil (21) einen Hohlraum (21.2) umgibt, der zumindest teilweise mit dem thermischen Funktionselement (22) ausgefüllt ist.

15. Brandschutzverglasung nach einem der Ansprüche 1 bis 14,
**dadurch gekennzeichnet,**
**dass** das thermische Funktionselement (22) nicht brennbaren mineralischen Plattenwerkstoffen, Glasfaserkompositen oder anorganischen Salzhydraten besteht.

16. Brandschutzverglasung nach einem der Ansprüche 1 bis 15,
**dadurch gekennzeichnet,**
**dass** die Durchschusshemmung der Stützprofile durch zusätzliche Einlagen wie Panzerstahl oder Materialkomposite verbessert wird.
